# EUROPEAN PATENT APPLICATION

(11) **EP 2 667 309 A1**
(43) Date of publication of application: **27.11.2013**
(21) Application number: 11856476.4
(22) Date of filing: 17.01.2011
(51) Int. Cl.: G06F 12/16

(54) **MEMORY MANAGEMENT METHOD, MEMORY MANAGEMENT DEVICE AND MEMORY MANAGEMENT CIRCUIT**

(71) Applicant: Fujitsu Limited, Kawasaki-shi, Kanagawa 211-8588 (JP)
(72) Inventor: KAWANO, Hiroshi, Kawasaki-shi Kanagawa 211-8588 (JP); SUGANO, Fumitake, Kawasaki-shi Kanagawa 211-8588 (JP); AKIU, Susumu, Kawasaki-shi Kanagawa 211-8588 (JP)
(74) Representative: HOFFMANN EITLE
(86) International application number: PCT/JP2011/050666
(87) International publication number: WO 2012/098633

(57) **Abstract**

A memory controller (10) includes a DIMM address conversion table in which a physical address, which is used by a hypervisor (3) to uniquely identify a storage area in a memory 4, is associated with a memory address, which is used by a memory controller (10) to uniquely identify the storage area. The memory controller (10) extracts, from the DIMM address conversion table (11), a physical address that indicates a storage area in a DIMM in which an error has been detected. Furthermore, the memory controller (10) acquires, from the hypervisor (3) a physical address that indicates a storage area that stores therein information to be deleted due to the occurrence of the error and then extracts, from the DIMM address conversion table (11), the memory address that is associated with the acquired physical address. Then, the memory controller (10) moves the information stored in the storage area indicated by the extracted physical address to the storage area indicated by the extracted memory address.

## Description

### FIELD

The embodiments discussed herein are directed to a memory management method, a memory management device, and a memory management circuit.

### BACKGROUND

There is a known conventional virtual machine system that operates multiple virtual machines in a physical machine that includes multiple memory modules. The virtual machine system operates a hypervisor in which all storage areas included in the memory modules are divided into multiple storage areas and the divided storage areas are allocated to the virtual machines.

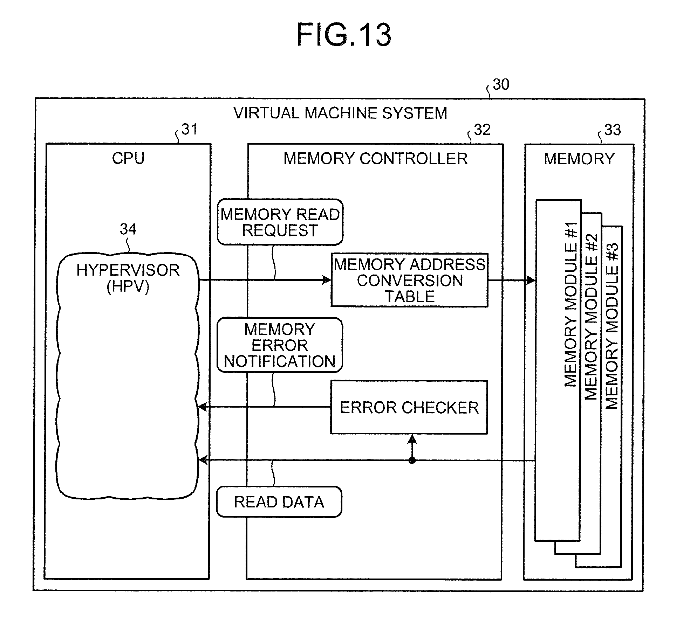

FIG. 13 is a schematic diagram illustrating a virtual machine system. In the example illustrated in FIG. 13, a virtual machine system 30 includes a central processing unit (CPU) 31, a memory controller 32, and a memory 33 that includes multiple memory modules #1 to #3. Furthermore, a hypervisor 34 is a program executed by the CPU 31 and that divides a storage area included in each of the memory modules and allocates the divided storage areas to the multiple virtual machines.

The memory controller 32 in the virtual machine system 30 has a memory address conversion table. In the memory address conversion table, a physical address, which is used by the CPU 31 and the hypervisor 34 to uniquely identify a storage area in the memory 33, is associated with a memory address, which is used by the memory controller 32 to uniquely identify the storage area in the memory 33.

Then, if the memory controller 32 acquires a read request for data together with the physical address from the CPU 31, the memory controller 32 extracts a memory address associated with the acquired physical address from the memory address conversion table. Then, the memory controller 32 acquires data stored in the extracted memory address.

The memory controller 32 sometimes detects an uncorrectable error (UE) from the acquired data. In such a case, the memory controller 32 notifies the hypervisor 34 that a UE has been detected.

At this point, there is a high possibility that a failure will occur in the future in the memory module that stores therein data from which a UE has been detected. Accordingly, if the hypervisor 34 receives a notification from the memory controller 32 indicating that an UE has occurred, the hypervisor 34 moves the data stored in the memory module, in which the UE has occurred, to another memory module.

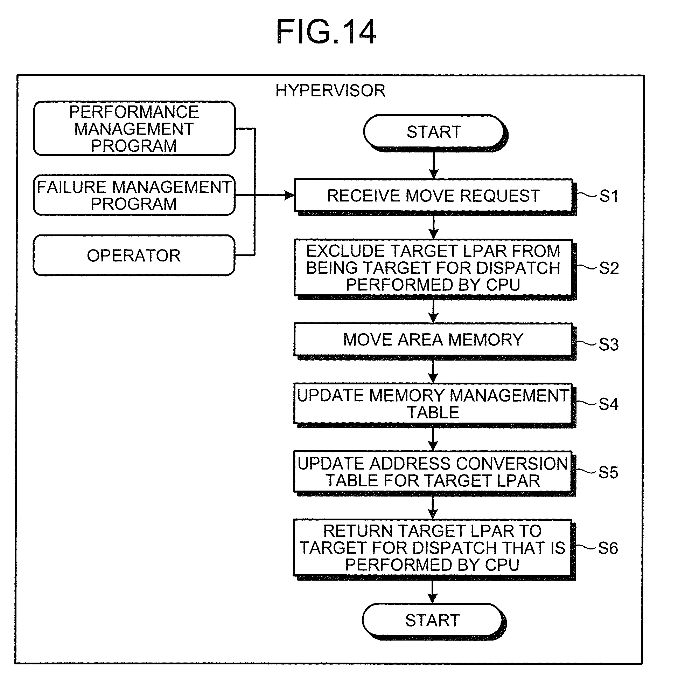

In the following, a process performed by a hypervisor in order to move data will be described with reference to FIG. 14. FIG. 14 is a schematic diagram illustrating an example of a process executed by a hypervisor. In the example illustrated in FIG. 14, the hypervisor 34 receives, from a performance management program, from a failure management program, or from an operator, a notification of a target Logical Partition (LPAR) in which data to be moved is stored and of a request for moving the data (Step S1).

Then, the hypervisor 34 excludes the received notification indicating target LPAR from being the target for dispatch, which is performed by the CPU 31 (Step S2). Specifically, the hypervisor 34 stops the virtual machine that uses the data stored in the target LPAR. Then, the hypervisor 34 moves the data stored in the target LPAR to another memory module (Step S3) and updates the memory management table by associating the physical address that is obtained before the data is moved with the memory address that newly stores therein the data (Step S4).

Then, the hypervisor 34 updates the address conversion table for the target LPAR on the basis of the updated memory management table (Step S5) and returns the target LPAR to the target for dispatch, which is performed by the CPU (Step S6).

### Citation List

### Patent Literature

Patent Literature 1: Japanese Laid-open Patent Publication No. 2009-059121

### Summary

### Technical Problem

However, with the above described technology in which a hypervisor moves data, there is a problem in that, if a UE occurs in a memory module in which the hypervisor itself is stored, it is not possible to perform a move process on the memory and thus fault tolerance is degraded.

Specifically, to move data to another memory module, a hypervisor itself needs to operate. However, a hypervisor is not able to exclude the target LPAR in which data on the hypervisor itself is stored from the target for dispatch. Consequently, if a UE occurs in a memory module in which data on the hypervisor is stored, a move process is not able to be performed on the data; therefore, fault tolerance is degraded.

The present invention has been conceived in light of the circumstances described above, and an object thereof is to improve fault tolerance.

### Solution to Problem

According to an aspect of an embodiment, a memory management method performed by a memory management device is provided. The memory management device includes a conversion table in which a physical address, which is used by an information processing apparatus to uniquely identify a storage area included in multiple memory modules, is associated with a memory address, which is used for the memory management device uniquely identifying the storage area. Furthermore, the memory management device extracts, from the conversion table, a physical address that indicates a storage area of a memory module in which an error has been detected. Furthermore, the memory management device acquires, from an information processing apparatus, a physical address that indicates a storage area in which information to be deleted due to the occurrence of an error is stored and then extracts, from the conversion table, the memory address that is associated with the acquired physical address. Then, the memory management device updates the conversion table to a conversion table in which the extracted memory address is associated with the extracted physical address. Furthermore, the memory management device moves information stored in the storage area indicated by the extracted physical address to the storage area indicated by the extracted memory address. Advantageous Effects of Invention

According to an aspect of an embodiment of the present invention, fault tolerance can be improved.

### Brief Description of Drawings

FIG. 1 is a schematic diagram illustrating a virtual machine system according to a first embodiment.
FIG. 2 is a schematic diagram illustrating an example of a physical address conversion table managed by a hypervisor.
FIG. 3 is a schematic diagram illustrating an example of physical addresses allocated to entries.
FIG. 4 is a schematic diagram illustrating entries to be deleted.
FIG. 5 is a schematic diagram illustrating the relationship between entries deleted from the physical address conversion table and physical addresses.
FIG. 6 is a schematic diagram illustrating an example of a DIMM address conversion table.
FIG. 7 is a schematic diagram illustrating physical addresses and DIMM addresses detected from the DIMM address conversion table.
FIG. 8 is a schematic diagram illustrating a process for updating the DIMM address conversion table 11 performed by a data move control circuit.
FIG. 9 is a flowchart illustrating the flow of a process executed by a memory controller and a hypervisor.
FIG. 10 is a schematic diagram illustrating a virtual machine system according to a second embodiment.
FIG. 11 is a flowchart illustrating the flow of an invalid area determination performed by a hypervisor according to the second embodiment.
FIG. 12 is a flowchart illustrating an example of the flow of an invalid area determination performed by a hypervisor according to a third embodiment.
FIG. 13 is a schematic diagram illustrating a virtual machine system.
FIG. 14 is a schematic diagram illustrating an example of a process executed by a hypervisor.

### Description of Embodiments

Preferred embodiments of a memory management method, a memory management device, and a memory management circuit according to the present invention will be described below with reference to the accompanying drawings.

### [a] First Embodiment

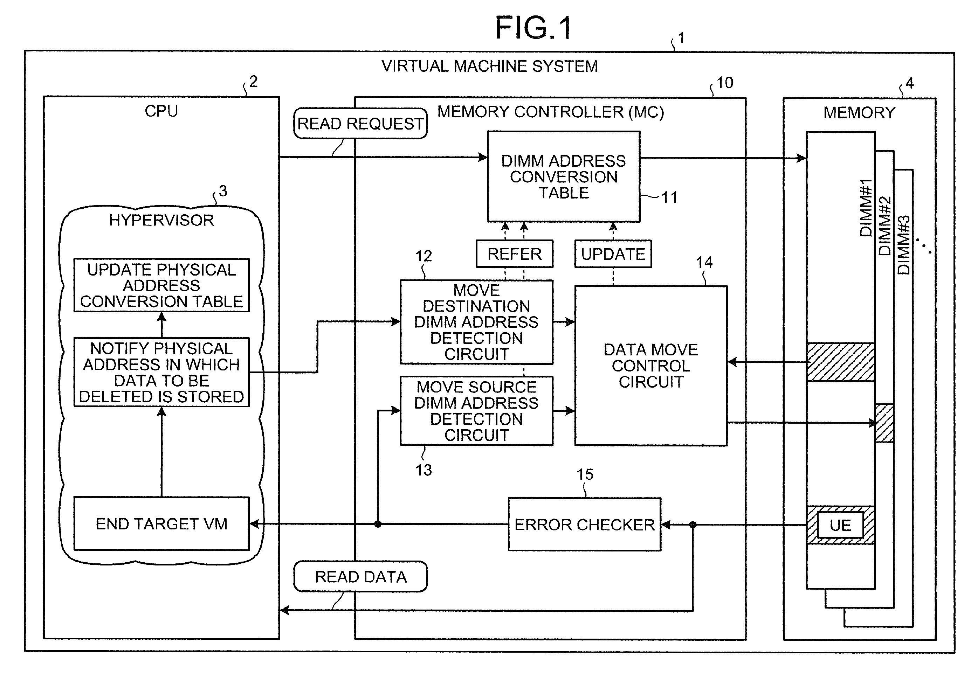

In a first embodiment described below, an example of a virtual machine system that includes a memory controller that executes a memory management method will be described with reference to FIG. 1. FIG. 1 is a schematic diagram illustrating a virtual machine system according to a first embodiment.

As illustrated in FIG. 1, a virtual machine system 1 according to the first embodiment includes a central processing unit (CPU) 2, a memory controller 10, and a memory 4. In this example, the memory 4 includes multiple Dual Inline Memory Modules (DIMMs) #1 to #3. The memory controller 10 includes a DIMM address conversion table 11, a move destination DIMM address detection circuit 12, a move source DIMM address detection circuit 13, a data move control circuit 14, and an error checker 15.

In the following, the CPU 2 and a hypervisor 3 that is a program executed by the CPU 2 will be described first and then a process performed by each unit 11 to 15 included in the memory controller 10 will be described.

First, the CPU 2 and the hypervisor 3 will be described. The CPU 2 is an information processing apparatus that operates the hypervisor 3. If the CPU 2 reads data stored in any one of the DIMMs #1 to #3 in the memory 4, the CPU 2 sends a read request to the memory controller 10 together with a physical address in which the data is stored. The physical addresses mentioned here mean each of the addresses that uniquely indicates a storage area included in the memory 4. Furthermore, the CPU 2 receives the data stored in the memory 4 as read data from the memory controller 10.

The hypervisor 3 is a program that allocates the storage areas included in the memory 4 to multiple virtual machines (VMs) and is executed by the CPU 2. Furthermore, the hypervisor 3 receives a notification from the memory controller 10, which will be described later, indicating that an uncorrectable error (UE) has been detected. In such a case, the hypervisor 3 allows the memory controller 10 to perform a process of moving data stored in the DIMM in which the UE has been detected to another DIMM.

Specifically, the hypervisor 3 manages a physical address conversion table 5 in which a virtual address of a VM is associated with a physical address. Furthermore, if the hypervisor 3 receives, from the memory controller 10, which will be described later, a notification indicating that a UE has occurred, the hypervisor 3 allows the VM that uses the storage area in which the UE has occurred to stop running. Furthermore, by using the physical address conversion table 5, the hypervisor 3 detects an entry number allocated to the VM that has stopped running.

Then, the hypervisor 3 extracts, from the physical address conversion table 5, a physical address associated with the detected entry number and notifies the memory controller 10 of the extracted physical address. As will be described later, the memory controller 10 deletes the data stored in the storage area indicated by the physical address of which a notification is received from the hypervisor 3. Consequently, the hypervisor 3 notifies the memory controller 10 of the physical address in which the data to be deleted is stored.

Furthermore, if the hypervisor 3 notifies the memory controller 10 of the physical address extracted from the physical address conversion table 5, the hypervisor 3 deletes the entry that is associated with the extracted physical address from among the entries in the conversion table and then updates the physical address conversion table 5. Then, by using the updated physical address conversion table 5, the hypervisor 3 allocates the storage areas in the memory 4 to multiple VMs.

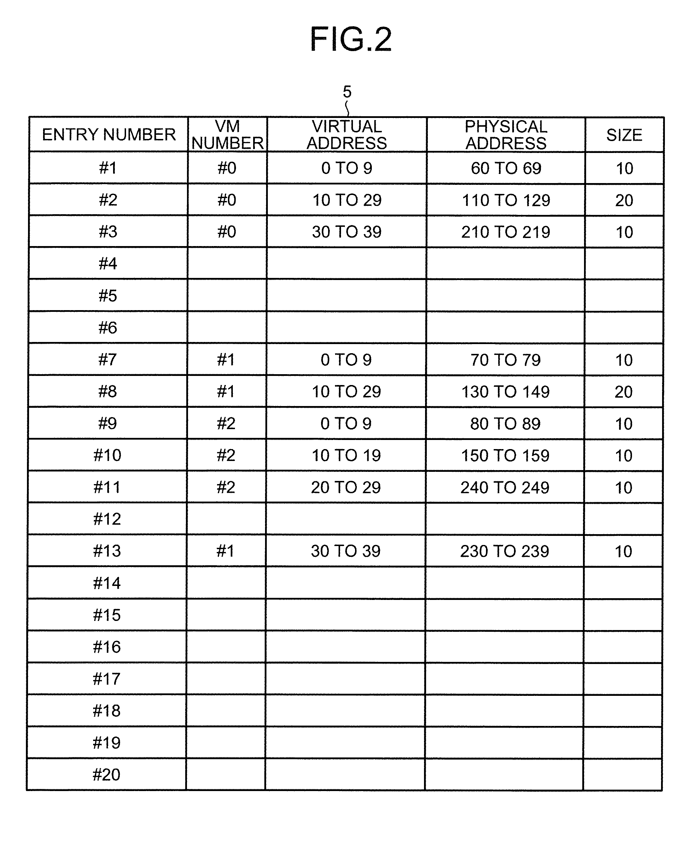

FIG. 2 is a schematic diagram illustrating an example of a physical address conversion table 5 managed by a hypervisor. In the example illustrated in FIG. 2, the hypervisor 3 manages the physical address conversion table 5 in which an entry number, a VM number, a virtual address, a physical address, and the size are associated with each other.

The entry number mentioned here means a number that indicates a storage area allocated to a VM. The VM number mentioned here means a number that uniquely indicates a virtual machine to which a storage area is allocated. The virtual address mentioned here means a memory address that is used by a virtual machine to indicate a storage area. The physical address mentioned here means a memory address that is used by the hypervisor 3 to identify all of the storage areas in the memory 4. The size mentioned here means information that indicates the number of blocks in a storage area allocated to a VM.

In the example illustrated in FIG. 2, in an entry #1, it is indicated that a storage area with 10 blocks indicated by the physical address "60 to 69" is allocated to the virtual address "0 to 9" that is used by a VM #0. In an entry #8, it is indicated that a storage area with 20 blocks indicated by the physical address "130 to 149" is allocated to the virtual address "10 to 29", which is used by a VM #1. Furthermore, in an entry #9, it is indicated that a storage area with 10 blocks indicated by the physical address "80 to 89" is allocated to the virtual address "0 to 9", which is used by a VM #2.

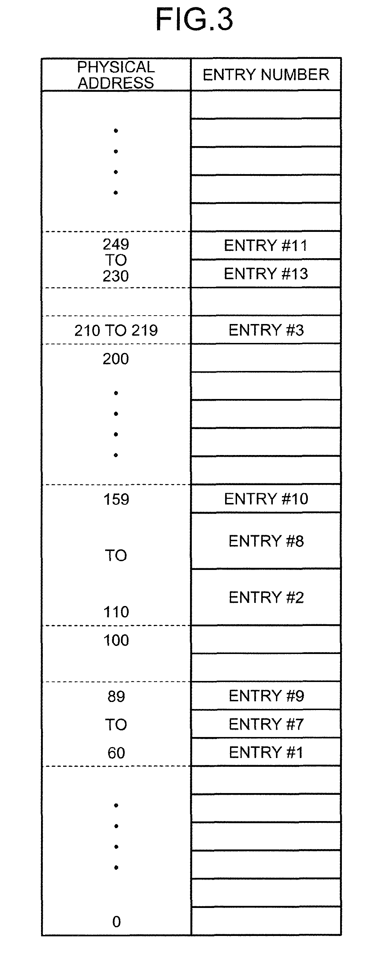

On the basis of the physical address conversion table 5 illustrated in FIG. 2, the hypervisor 3 associates each of the entries and physical addresses as illustrated in FIG. 3. FIG. 3 is a schematic diagram illustrating an example of physical addresses allocated to entries.

In the example illustrated in FIG. 3, the physical address "60 to 89" is allocated to the entry #1, #7, and #9; the physical address "110 to 159" is allocated to the entries #2, #8, #10; the physical address "210 to 219" is allocated to the entry #3; and the physical address "230 to 249" is allocated to the entries #13 and #11.

In the following, an example of a process executed by the hypervisor 3 will be described with reference to a drawing. A description will be given below of an example in which the hypervisor 3 acquires, from the memory controller 10, a notification that a UE has occurred in data stored in the storage area indicated by the physical address "240 to 249".

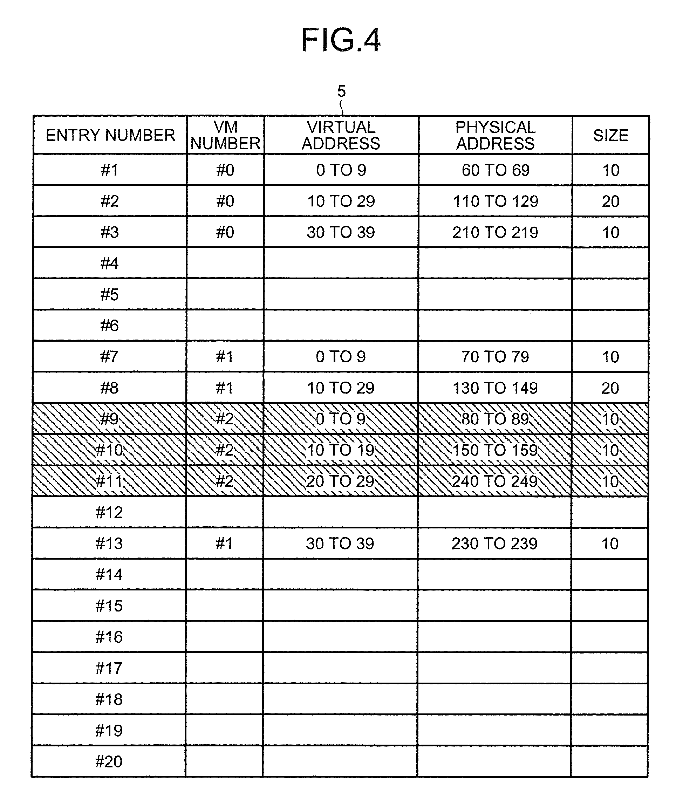

FIG. 4 is a schematic diagram illustrating entries to be deleted. In the example illustrated in FIG. 4, the hypervisor 3 receives, from the memory controller 10, a notification that a UE has occurred in the storage area indicated by the physical address "240 to 249". In such a case, on the basis of the physical address conversion table 5, the hypervisor 3 specifies the VM "#2", which is the VM to which the physical address "240 to 249" is allocated.

Then, as illustrated by the oblique lines in FIG. 4, the hypervisor 3 detects, from the physical address conversion table 5, the physical addresses "80 to 89", "150 to 159", and "240 to 249" allocated to the VM "#2". Then, the hypervisor 3 notifies the memory controller 10 of the detected physical addresses "80 to 89", "150 to 159", and "240 to 249". Specifically, if a UE has occurred in the data stored in the storage area that is allocated to the VM "#2", it is not possible to continuously use the VM "#2". Consequently, the hypervisor 3 determines that the data stored in the storage area allocated to the VM "#2" is to be deleted. Then, the hypervisor 3 notifies the memory controller 10 of the physical addresses of the storage area in which the data to be deleted is stored.

Furthermore, the hypervisor 3 deletes information on the VM numbers, the virtual addresses, the physical addresses, the sizes that are associated with the entries #9 to #11 in the physical address conversion table 5 and then updates the physical address conversion table 5. Then, by using the updated physical address conversion table 5, the hypervisor 3 continues the process of allocating a storage area of the memory 4 to the VMs #0 and #1.

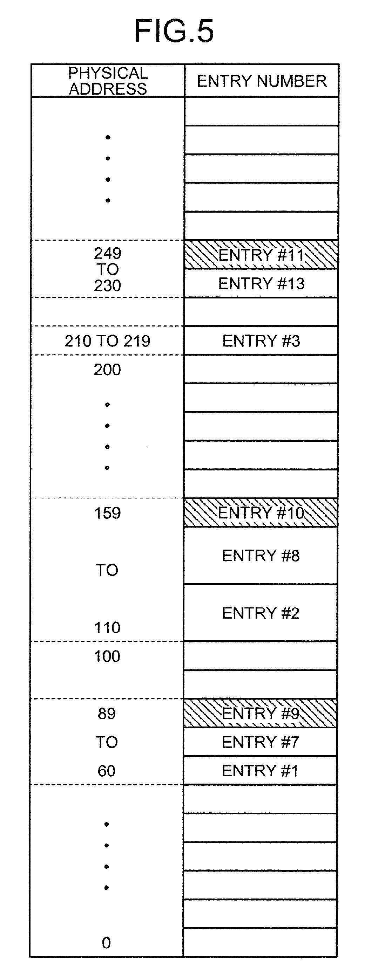

FIG. 5 is a schematic diagram illustrating the relationship between entries deleted from the physical address conversion table and physical addresses. As illustrated by the oblique lines in FIG. 5, the hypervisor 3 deletes the entries #9, #10, and #11 associated with the VM #2 from the physical address conversion table 5. Consequently, because the hypervisor 3 can continue its operation without setting a new physical address, it is possible to prevent the supply of physical addresses that are set when the hypervisor 3 boots up from running out.

In the following, each of the units 11 to 15 included in the memory controller 10 will be described. The DIMM conversion address table 11 stores therein physical addresses associated with DIMM addresses that are used by the memory controller 10 to identify storage areas included in each of the DIMMs #1 to #3.

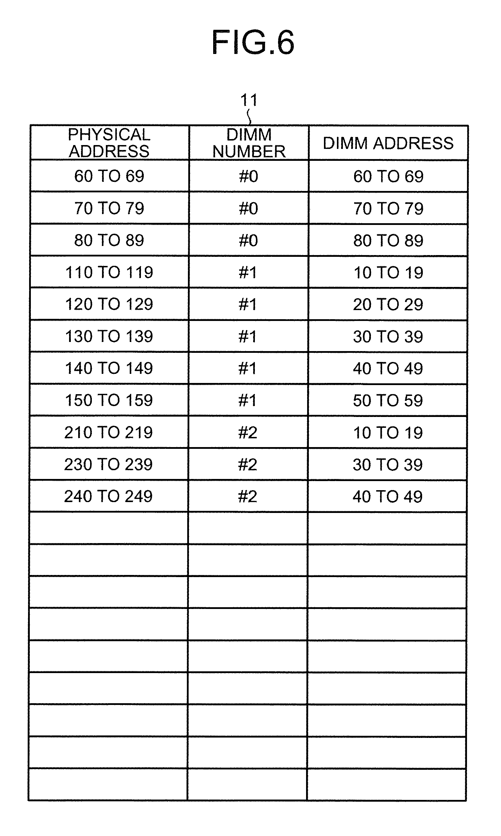

FIG. 6 is a schematic diagram illustrating an example of the DIMM address conversion table 11. Specifically, as illustrated in FIG. 6, the DIMM address conversion table 11 stores therein, in an associated manner, a physical address, a DIMM number uniquely indicating a DIMM, and a DIMM address that indicates a storage area included in each of the DIMMs. Specifically, the DIMM address conversion table 11 indicates, by using a physical address, the location of stored data that is targeted for access.

The example illustrated in FIG. 6 indicates that, in the DIMM address conversion table 11, the data accessed by using the physical address "110 to 119" is stored in the DIMM address "10 to 19" in the DIMM "#1". Furthermore, it is indicated that, in the DIMM address conversion table 11, the data accessed by using the physical address "120 to 129" is stored in the DIMM address "20 to 29" in the DIMM "#1".

A description will be given here by referring back to FIG. 1. The move destination DIMM address detection circuit 12 acquires, from the hypervisor 3, a notification of a physical address that indicates a storage area in which information to be deleted due to the UE that has occurred is stored. In such a case, the move destination DIMM address detection circuit 12 refers to the DIMM address conversion table 11 and extracts the DIMM address that is associated with the received notification indicating the physical address. Then, the move destination DIMM address detection circuit 12 notifies the data move control circuit 14 of the extracted DIMM address.

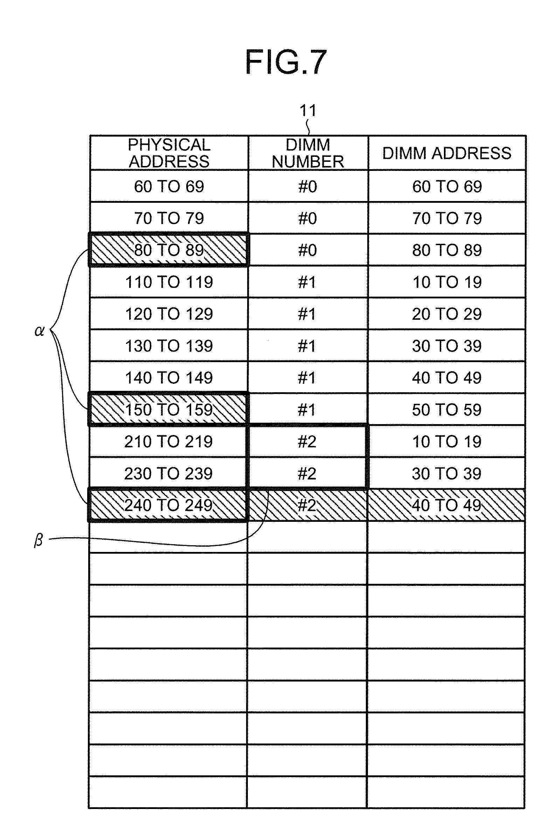

FIG. 7 is a schematic diagram illustrating physical addresses and DIMM addresses detected from the DIMM address conversion table 11. For example, it is assumed that the move destination DIMM address detection circuit 12 receives a notification of the physical addresses "80 to 89", "150 to 159", and "240 to 249" from the hypervisor 3. In such a case, as illustrated by the symbol α in FIG. 7, the move destination DIMM address detection circuit 12 searches the DIMM address conversion table 11 for the physical addresses "80 to 89", "150 to 159", and "240 to 249" that are received as a notification from the hypervisor 3.

Then, the move destination DIMM address detection circuit 12 extracts the DIMM number "#0" and the DIMM address "80 to 89" that are associated with the searched physical address "80 to 89". Thereafter, the move destination DIMM address detection circuit 12 notifies the data move control circuit 14 of the extracted DIMM number "#0" and the DIMM address "80 to 89".

Furthermore, the move destination DIMM address detection circuit 12 extracts the DIMM number "#1" and the DIMM address "50 to 59" that are associated with the searched physical address "150 to 159". Then, the move destination DIMM address detection circuit 12 notifies the data move control circuit 14 of the extracted DIMM number "#1" and the DIMM address "50 to 59".

Furthermore, the move destination DIMM address detection circuit 12 extracts the DIMM number "#2" and the DIMM address "40 to 49" that are associated with the searched physical address "240 to 249". Then, the move destination DIMM address detection circuit 12 notifies the data move control circuit 14 of the DIMM number "#2" and the DIMM address "40 to 49".

Specifically, the move destination DIMM address detection circuit 12 determines that the storage area indicated by the physical addresses indicated by the symbol α illustrated in FIG. 7 is a storage area of the move destination to which the data move control circuit 14, which will be described later, moves data. Then, the move destination DIMM address detection circuit 12 extracts the DIMM address that indicates the determined storage area of the move destination and notifies the data move control circuit 14 of the extracted DIMM address.

A description will be given here by referring back to FIG. 1. If a UE is detected in one of the DIMMs #1 to #3 included in the memory 4, the move source DIMM address detection circuit 13 extracts, from the DIMM address conversion table 11, the physical address that indicates the storage area in the DIMM in which the UE has been detected.

It is assumed that the move source DIMM address detection circuit 13 receives a notification from the error checker 15, which will be described later, of the DIMM number and the DIMM address of the DIMM in which a UE has occurred. In such a case, the move source DIMM address detection circuit 13 refers to the DIMM address conversion table 11 and detects a physical address that is associated with the received notification indicating the DIMM number.

Then, from among the detected physical addresses, the move source DIMM address detection circuit 13 extracts a physical address that is not associated with the DIMM address of which a notification is received from the error checker 15. Thereafter, the move source DIMM address detection circuit 13 notifies the data move control circuit 14 of the extracted physical address and both the DIMM number and the DIMM address that are associated with the extracted physical address.

In the example illustrated in FIG. 7, it is assumed that the move source DIMM address detection circuit 13 receives a notification from the error checker 15 of DIMM number "#2" and the DIMM address "40 to 49" of the DIMM in which a UE has occurred. In such a case, the move source DIMM address detection circuit 13 refers to the DIMM address conversion table 11 and detects the physical addresses "210 to 219", "230 to 239", and "240 to 249" associated with the DIMM number "#2" that is received as a notification from the error checker 15.

Then, the move source DIMM address detection circuit 13 extracts, from the DIMM address conversion table 11, the physical addresses "210 to 219" and "230 to 239" that are not associated with the DIMM addresses "40 to 49" that are received as a notification from the error checker 15. Thereafter, the move source DIMM address detection circuit 13 notifies the data move control circuit 14 of the DIMM number "#2" and the DIMM address "10 to 19" that are associated with the extracted physical address "210 to 219. Furthermore, the move source DIMM address detection circuit 13 notifies the data move control circuit 14 of the DIMM number "#2" and the DIMM address "30 to 39" that are associated with the extracted physical address "240 to 249".

Specifically, as illustrated by the symbol β in FIG. 7, from among pieces of data stored in the DIMM #2 in which a UE has occurred, the move source DIMM address detection circuit 13 determines that the data that is to be moved is stored in a storage area other than the storage area in which the UE has occurred. Consequently, the move source DIMM address detection circuit 13 notifies, as the move source DIMM address, the data move control circuit 14 of the DIMM address in which the data to be moved is stored.

A description will be given here by referring back to FIG. 1. The data move control circuit 14 updates the DIMM address conversion table 11 by associating a DIMM address of which a notification is received from the move destination DIMM address detection circuit 12 with a physical address notified from the move source DIMM address detection circuit 13. Furthermore, the data move control circuit 14 moves the information, which is stored in the storage area indicated by the physical address that is notified from the move source DIMM address detection circuit 13, to the storage area indicated by the DIMM address of which a notification is received from the move destination DIMM address detection circuit 12.

Specifically, the data move control circuit 14 receives a notification of a DIMM number and a DIMM address from the move destination DIMM address detection circuit 12. Furthermore, the data move control circuit 14 receives a notification of a physical address, a DIMM number, and a DIMM address from the move source DIMM address detection circuit 13.

In such a case, the data move control circuit 14 moves the data that is stored in the DIMM address with the DIMM number of which a notification is received from the move source DIMM address detection circuit 13, to the DIMM address that has the DIMM number of which a notification is received from the move destination DIMM address detection circuit 12. For example, as illustrated in FIG. 1, the data move control circuit 14 moves, in a manner independent of a control by the hypervisor 3, the data that is stored in the storage area illustrated by the oblique lines in the DIMM #1 in which a UE has occurred to the storage area in the DIMM #2 illustrated by the oblique lines.

Furthermore, the data move control circuit 14 accesses the DIMM address conversion table 11. Then, the data move control circuit 14 deletes the DIMM address that is stored in the DIMM address conversion table 11 and that is associated with the DIMM number of which a notification is received from the move source DIMM address detection circuit 13. Furthermore, the data move control circuit 14 updates the DIMM address conversion table 11 by associating the physical address of which a notification is received from the move source DIMM address detection circuit 13 with the DIMM number and the DIMM address of which a notification is received from the move destination DIMM address detection circuit 12.

In the following, an example of a process of moving data performed by the data move control circuit 14 will be described. First, the data move control circuit 14 receives, from the move destination DIMM address detection circuit 12, a notification of the DIMM number "#0" that is associated with the DIMM address "80 to 89" and the DIMM number "#1" that is associated with the DIMM address "50 to 59". Furthermore, the data move control circuit 14 receives, from the move source DIMM address detection circuit 13, a notification of the combination of the physical address "210 to 219", the DIMM number "#2", and the DIMM address "10 to 19". Furthermore, the data move control circuit 14 receives a notification of the combination of the physical address "230 to 239", the DIMM number "#2", and the DIMM address "30 to 39".

Then, the data move control circuit 14 moves the information stored in the DIMM address "10 to 19" in the DIMM "#2" of which a notification is received from the move source DIMM address detection circuit 13 to the DIMM address "80 to 89" in the DIMM "#0" of which a notification is received from the move destination DIMM address detection circuit 12. Furthermore, the data move control circuit 14 moves the information stored in the DIMM address "30 to 39" stored in the DIMM "#2" of which a notification is received from the move source DIMM address detection circuit 13 to the DIMM address "50 to 59" in the DIMM "#1" of which a notification is received from the move destination DIMM address detection circuit 12.

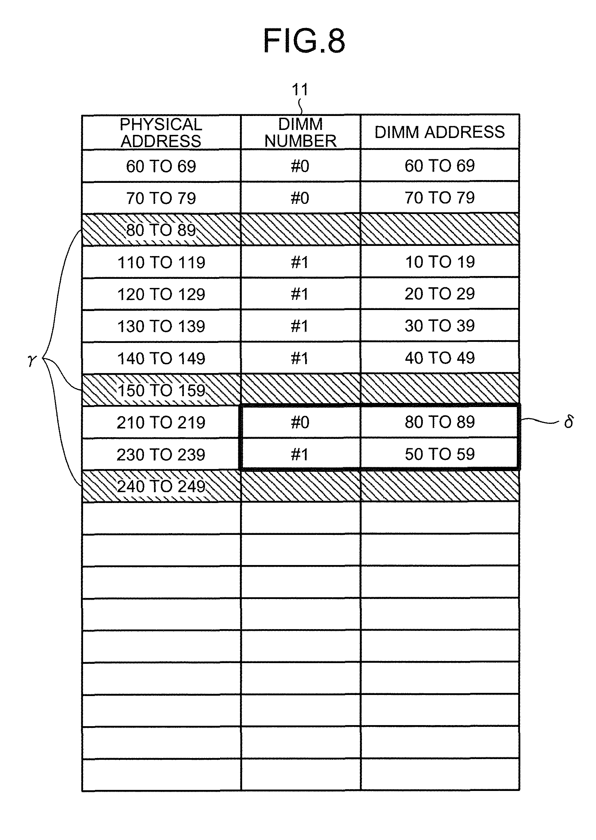

In the following, an example of a process, performed by the data move control circuit 14, of updating the DIMM address conversion table 11 will be described with reference to FIG. 8. FIG. 8 is a schematic diagram illustrating a process for updating the DIMM address conversion table 11 performed by a data move control circuit. First, the data move control circuit 14 accesses the DIMM address conversion table 11 and deletes the DIMM address that is associated with the DIMM number "#2" of which a notification is received from the move source DIMM address detection circuit 13.

Furthermore, as illustrated by the symbol γ in FIG. 8, the data move control circuit 14 deletes, from the DIMM address conversion table 11, the combination of the DIMM number "#0" and the DIMM address "80 to 89" of which a notification is received from the move destination DIMM address detection circuit 12. Furthermore, as illustrated by the symbol γ in FIG. 8, the data move control circuit 14 deletes, from the DIMM address conversion table 11, the combination of the DIMM number "#1" and the DIMM address "50 to 59" of which a notification is received from the move destination DIMM address detection circuit 12.

Furthermore, as illustrated by δ in FIG. 8, the data move control circuit 14 stores, in the DIMM address conversion table 11 in an associated manner, the combination of the physical address "210 to 219", the DIMM number "#0", and the DIMM address "80 to 89". Furthermore, the data move control circuit 14 stores, in the DIMM address conversion table 11 in an associated manner, the combination of the physical address "230 to 239", the DIMM number "#1", and the DI-MM address "50 to 59".

As described above, the hypervisor 3 according to the first embodiment notifies the memory controller 10 of the physical address in which the data to be deleted is stored, without moving the data stored in the DIMM in which a UE has occurred to another DIMM. Then, on the basis of the physical address of which a notification is received from the hypervisor 3, the DIMM number, and the DIMM address of the DIMM in which the UE has occurred, the memory controller 10 moves the data in the DIMM in which the UE has occurred to another DIMM. In other words, the memory controller 10 moves data in a manner independent of the control performed by the hypervisor 3.

Consequently, the memory controller 10 can appropriately move data even if the data stored in the DIMM in which a UE has occurred is the data on the hypervisor 3. Therefore, the memory controller 10 can improve fault tolerance for the entirety of the virtual machine system 1.

A description will be given here by referring back to FIG. 1. The error checker 15 detects a UE that has occurred in one of the DIMMs #1 to #3 included in the memory 4. Specifically, the error checker 15 acquires the data that the CPU 2 has requested to read and determines whether a UE has occurred in the acquired data.

If it is determined that a UE has occurred in the acquired data, the error checker 15 notifies the move source DIMM address detection circuit 13 of the DIMM number and the DIMM address of the DIMM in which the acquired data is stored. Furthermore, the error checker 15 extracts, from the DIMM address conversion table 11, the physical address that is associated with the DIMM number and the DIMM address of the DIMM in which the acquired data is stored and then notifies the hypervisor 3 of the extracted physical address.

For example, the error checker 15 acquires the data stored in the DIMM address "40 to 49" of the DIMM with the DIMM number "#2". If the error checker 15 determines that a UE has occurred in the acquired data, the error checker 15 notifies the move source DIMM address detection circuit 13 of the combination of the DIMM number "#2" and the DIMM address "40 to 49" of the DIMM in which the acquired data is stored. Furthermore, the error checker 15 extracts, from the DIMM address conversion table 11, the physical address "240 to 249" associated with the DIMM number "#2" and the DIMM address "40 to 49" and then notifies the hypervisor 3 of the extracted physical address.

For example, the move destination DIMM address detection circuit 12, the move source DIMM address detection circuit 13, the data move control circuit 14, and the error checker 15 are electronic circuits. Examples of the electronic circuits include an integrated circuit, such as an application specific integrated circuit (ASIC) or a field programmable gate array (FPGA), a central processing unit (CPU), and a micro processing unit (MPU).

Furthermore, the DIMM address conversion table 11 is a semiconductor memory device, such as a random access memory (RAM), a read only memory (ROM), and flash memory, or a storage device, such as a hard disk and optical disk.

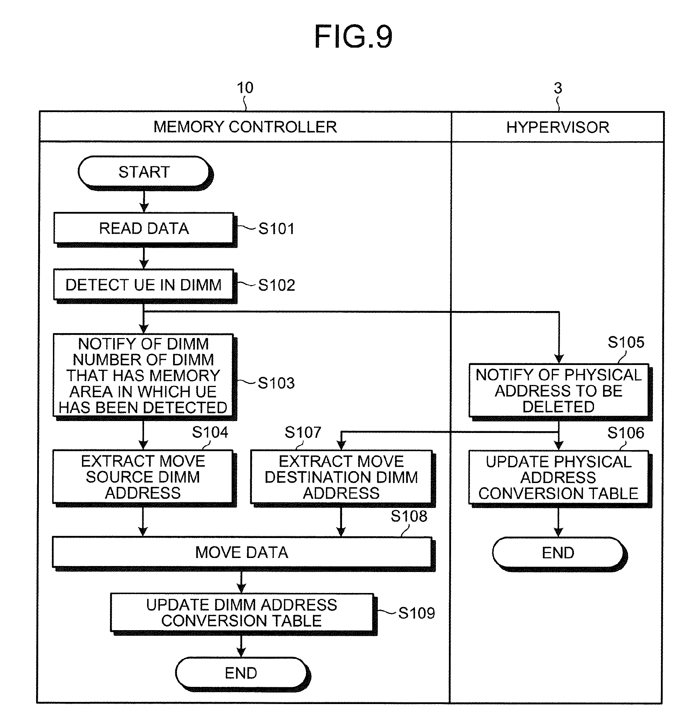

FIG. 9 is a flowchart illustrating the flow of a process executed by a memory controller and a hypervisor. In the following, a case in which a UE occurs in a DIMM in which read data is stored will be described.

First, the memory controller 10 reads data stored in the storage area indicated by the physical address of which a notification is received from the CPU 2 (Step S101). Then, the memory controller 10 checks the read data and determines that a UE has occurred in the DIMM from which the data is read (Step S102).

Then, the error checker 15 in the memory controller 10 notifies the move source DIMM address detection circuit 13 of the DIMM number of the DIMM in which the UE has occurred (Step S103). On the basis of the received notification indicating the DIMM number, the move source DIMM address detection circuit 13 extracts a DIMM address that is the move source of the data (Step S104).

On the basis of the physical address of which a notification is received from the memory controller 10, the hypervisor 3 extracts a physical address of the storage area in which the data to be deleted is stored and then notifies the memory controller 10 of the extracted physical address (Step S105). Then, the hypervisor 3 updates the physical address conversion table 5 (Step S106) and ends the process. Specifically, the hypervisor 3 ends the process without performing a move process on the data.

Then, on the basis of the physical address of which a notification is received from the hypervisor 3, the move destination DIMM address detection circuit 12 in the memory controller 10 extracts a DIMM address that is the move destination of the data (Step S107). Then, the data move control circuit 14 moves the data stored in the storage area indicated by the DIMM address of the move source to the storage area indicated by the DIMM address of the move destination (Step S108).

Then, the data move control circuit 14 updates the DIMM address conversion table 11 (Step S109) and then ends the process.

### [Advantage of the first embodiment]

As described above, the memory controller 10 according to the first embodiment includes the DIMM address conversion table 11 in which physical addresses are associated with DIMM addresses. Furthermore, the memory controller 10 receives a notification from the hypervisor 3 of the physical address of the storage area in which data that is to be deleted due to the occurrence of UE is stored. In such a case, the memory controller 10 extracts, from the DIMM address conversion table 11, a DIMM address associated with the received notification indicating the physical address. Then, the memory controller 10 moves the data in the DIMM in which the UE has occurred to the storage area indicated by the extracted DIMM address.

Consequently, even if data on the hypervisor 3 is stored in the DIMM in which a UE has occurred, the memory controller 10 can move the data to another DIMM. Specifically, the memory controller 10 can move not only the data that is used by a VM but also the data on the hypervisor 3, for which fault tolerance is most needed, to another DIMM from the DIMM in which the UE has occurred. Consequently, the memory controller 10 can improve fault tolerance of the virtual machine system 1.

Furthermore, in addition to moving data, the memory controller 10 updates the DIMM address conversion table 11 by newly associating the DIMM address that indicates the storage area of the move destination with the physical address that indicates the storage area of the move source. Specifically, the memory controller 10 dynamically updates the DIMM address conversion table 11 in accordance with the moving of data. Consequently, the memory controller 10 can appropriately continue to access a memory without updating, in accordance with the moving of data, the physical address conversion table 5 that is used by the hypervisor 3.

Furthermore, as described above, because the memory controller 10 moves data to the storage area, as the move destination of the data, that is indicated by the physical address of which a notification is received from the hypervisor 3, the memory controller 10 can further appropriately perform the move process on the data without additionally improving the move process. Specifically, because the memory controller 10 allows the hypervisor 3 to extract the move destination of data, the move process can be more appropriately performed on data by only improving the hypervisor 3.

### [b] Second Embodiment

In a second embodiment, a description will be given of an example in which, in order to prepare for a case in which the storage capacity of the move destination does not match that of the move source, a hypervisor that has a function of changing the storage capacity of the move destination notifies a memory controller of a physical address that indicates the storage area of the move destination.

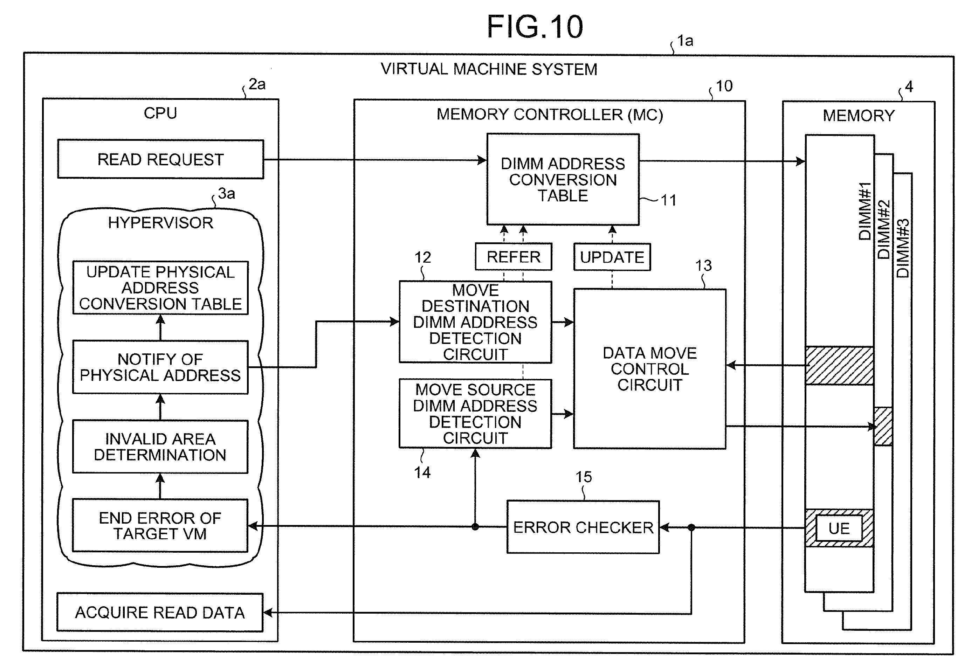

FIG. 10 is a schematic diagram illustrating a virtual machine system according to a second embodiment. In the example illustrated in FIG. 10, a virtual machine system 1a includes a CPU 2a, the memory controller 10, and the memory 4. The CPU 2a operates a hypervisor 3a according to the second embodiment. The other functions executed by the CPU 2a are the same as those executed by the CPU 2 described in the first embodiment. It is assumed that the memory 4 and the memory controller 10 have the same functions as those executed by the memory 4 and the memory controller 10, respectively, that are described in the first embodiment; therefore, descriptions thereof in detail will be omitted.

In addition to the process executed by the hypervisor 3 in the first embodiment, the hypervisor 3a compares the capacity of a storage area that is allocated to the VM that has stopped running with the storage capacity of a DIMM in which a UE has occurred. Then, on the basis of comparing whether the capacity of the storage area that will be the move destination of the data is greater than the storage capacity of the DIMM in which the UE has occurred, the hypervisor 3a executes an invalid area determining process that changes the physical address that is sent to the memory controller 10 as a notification.

Then, the hypervisor 3a notifies the move destination DIMM address detection circuit 12 of the physical address extracted by the invalid area determining process, i.e., the physical address that indicates the storage area in which data to be deleted is stored.

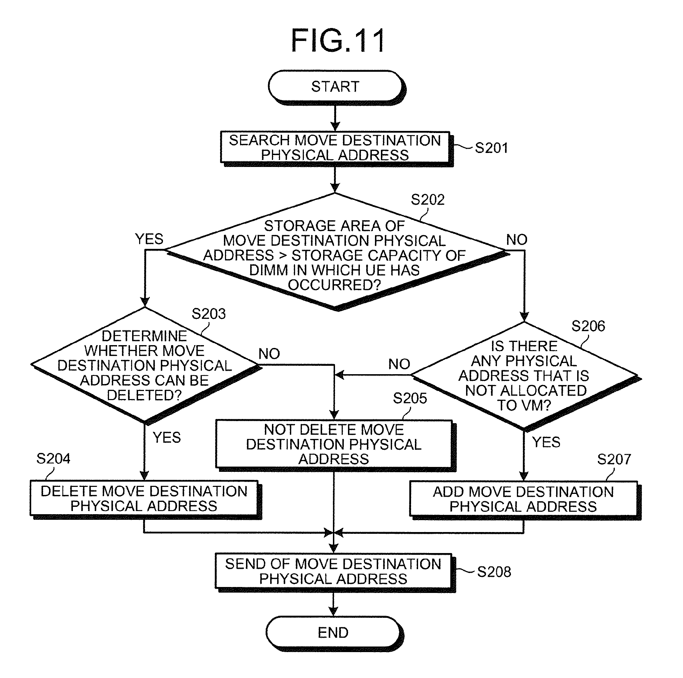

FIG. 11 is a flowchart illustrating the flow of an invalid area determination performed by a hypervisor according to the second embodiment. In the example illustrated in FIG. 11, the hypervisor 3a starts the invalid area determining process when it is triggered to do so by the VM that used the storage area in which the UE occurred being made to stop running.

First, the hypervisor 3a searches for a physical address that indicates the storage area that was used by the VM that is to be stopped, i.e., a physical address that indicates the storage area in which the data to be deleted is stored (Step S201). The physical address that indicates the storage area in which the data to be deleted is stored mentioned here means a physical address that indicates a storage area thats will be the move destination of data when a memory controller 10a moves the data. Accordingly, in the description below, the physical address that indicates the storage area in which data to be deleted is stored is referred to as a move destination physical address.

Then, the hypervisor 3a determines whether the storage area indicated by the move destination physical address is greater than the storage capacity of the DIMM in which a UE has occurred (Step S202). Specifically, the hypervisor 3a determines whether the storage area indicated by the move destination physical address is greater than the area in which data to be moved is stored.

If it is determined that the storage area indicated by the move destination physical address is greater than the storage capacity of the DIMM in which a UE has occurred (Yes at Step S202), the hypervisor 3a determines whether the storage area indicated by the move destination physical address can be deleted (Step S203). If it is determined that the storage area indicated by the move destination physical address can be deleted (Yes at Step S203), the hypervisor 3a selects, in the storage area indicated by the move destination physical address, a storage area with the same capacity as the storage capacity of the DIMM in which the UE has occurred. Specifically, the hypervisor 3a deletes the move destination physical address in accordance with the storage capacity of the DIMM in which the UE has occurred (Step S204).

At this point, an arbitrary method may be used as a method of selecting, in the storage area indicated by the move destination physical address, a storage area whose capacity is the same as that of the storage area in which data to be moved is stored. For example, the hypervisor 3a uses a method of selecting storage areas to which neighboring physical addresses are allocated or a method of randomly selecting storage areas.

In contrast, if it is determined that the move destination physical address is not able to be deleted (No at Step S203), the hypervisor 3a does not delete the move destination physical address (Step S205). Furthermore, if it is determined that the storage capacity of the DIMM in which the UE has occurred is greater than the capacity of the storage area indicated by the move destination physical address (No at Step S202), the hypervisor 3a determines whether there is a physical address that is not allocated to a VM (Step S206).

If it is determined that there is a physical address that is not allocated to a VM (Yes at Step S206), the hypervisor 3a adds the physical address that is not allocated to a VM to the move destination physical address (Step S207). Then, the hypervisor 3a sends the move destination physical address to the move destination DIMM address detection circuit 12 in the memory controller 10a (Step S208).

In contrast, if all the physical address are allocated to VMs (No at Step S206), the hypervisor 3a does not delete nor adds a move destination physical address (Step S205) but notifies the memory controller 10 of the move destination physical address (Step S208). Then, the hypervisor 3a updates the physical address conversion table 5 that is managed by the hypervisor 3a and ends the process.

### [Advantage of the second embodiment]

As described above, the hypervisor 3a compares the storage capacity of the DIMM in which an error has occurred with the capacity of the storage area in which information to be deleted is stored. Specifically, the hypervisor 3a compares the capacity of the storage area that will be the move destination of data with the storage capacity of the DIMM in which a UE has occurred. If the storage capacity of the DIMM in which the UE has occurred is less than the capacity of the storage area that will be the move destination of the data, the hypervisor 3a selects, in the storage area of the move destination of the data, a storage area whose capacity is the same as the storage capacity of the DIMM in which the UE has occurred. Then, the hypervisor 3a notifies the memory controller 10 of the physical address that indicates the selected storage area.

Consequently, the memory controller 10 can improve fault tolerance without wasting physical addresses. For example, the memory controller 10 deletes, from the DIMM address conversion table, the DIMM address that is associated with the physical address of which a notification is received from the hypervisor 3a. Specifically, the memory controller 10 deletes, from the targets for use, the move destination physical address of which a notification is received from the hypervisor 3a.

At this point, the hypervisor 3a compares the volume of data to be moved when a UE occurs with the capacity of a storage area that will be the move destination and then notifies the memory controller 10 of the move destination physical address that indicates the storage area whose capacity is the same as the volume of the data that is to be moved. Consequently, the memory controller 10 can effectively use a DIMM, while maintaining the improvement in fault tolerance and without deleting excess physical addresses from the targets for use.

Furthermore, if the storage capacity of the DIMM in which a UE has occurred is greater than the capacity of the storage area that will be the move destination of the data, the hypervisor 3a detects a physical address that is not allocated to a VM. Then, the hypervisor 3a sends, as the move destination physical address to the memory controller 10, the detected physical address and the physical address of the storage area that will be the move destination of the data. Specifically, if the volume of data to be moved is greater than the capacity of the storage area that will be the move destination, the hypervisor 3a notifies the memory controller 10 of both the physical address of the storage area that will be the move destination and the physical address that indicates the storage area that is not used by a VM.

Consequently, even if the volume of data to be moved is greater than the capacity of a storage area that will be the move destination, the memory controller 10 can appropriately move the data, thus improving fault tolerance.

Furthermore, the memory controller 10 according to the second embodiment moves data in accordance with the physical address of which a notification is received from the hypervisor 3a. Consequently, the memory controller 10 can appropriately perform a move process on data by only modifying the hypervisor 3a, which is a program, regardless of the configuration or the storage capacity of the DIMMs #1 to #3 in the memory 4 and without adding a new function.

### [c] Third Embodiment

In the above explanation, a description has been given of the embodiments according to the present invention; however, the embodiments are not limited thereto and can be implemented with various kinds of embodiments other than the embodiment described above. Therefore, another embodiment will be described as a third embodiment below.

### (1) Invalid area determination executed by a hypervisor

The hypervisor 3a described above deletes and adds a move destination physical address that is sent to the memory controller 10 as a notification on the basis of the storage capacity of a DIMM in which a UE has occurred and the capacity of a storage area that was used by a VM that has stopped running; however, the embodiment is not limited thereto. For example, if a move destination physical address is not able to be added, a hypervisor 3b according to the third embodiment may also not allow the memory controller 10 to perform the move process on data.

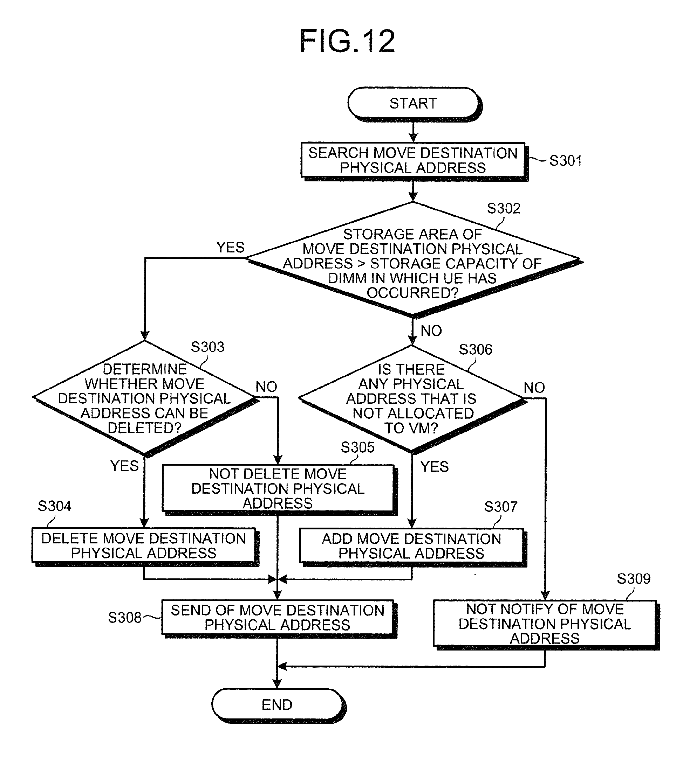

FIG. 12 is a flowchart illustrating an example of the flow of an invalid area determination performed by a hypervisor according to a third embodiment. The processes performed at Steps S301 to S308 illustrated in FIG. 12 are the same as those performed at Steps S201 to S208 illustrated in FIG. 11; therefore, descriptions thereof will be omitted.

As illustrated in FIG. 12, if the storage capacity of a DIMM in which a UE has occurred is greater than the capacity of a storage area that was used by a VM that has stopped running (No at Step S302), the hypervisor 3b searches for a physical address that is not allocated to a VM (Step S306). At this point, if all the physical addresses are allocated to VMs, i.e., it is not possible to add a storage area that will be the move destination of the data (No at Step S306), the hypervisor 3b notifies the memory controller 10 that the storage area of the move destination is insufficient, without notifying the memory controller 10 of a move destination physical address (Step S309).

Specifically, when a UE has occurred in any one of the DIMMs, if space sufficient for moving the data is not present in another DIMM, the hypervisor 3b does not allow the memory controller 10 to perform a move process on the data without the memory controller 10 being notified of the move destination physical address. In such a case, the memory controller 10 deletes a memory address of the DIMM in which a UE has occurred without performing the move process on the data.

Accordingly, if the storage capacity that will be the move destination of the data is less than the volume of the data, the memory controller 10 does not move the data. Consequently, it is possible to prevent a failure of the move process performed on data due to a shortage of storage capacity. Consequently, the memory controller 10 can appropriately perform move processes on data.

Furthermore, in addition to the processes described above, the hypervisor 3b may also delete and add a move destination physical address by using various kinds of information in accordance with the circumstances. For example, the hypervisor 3b receives, from the memory controller 10, a physical address in which data that is to be moved is stored and then calculates the volume of the data that is to be moved on the basis of the physical address of which a notification is received from the memory controller 10.

Then, on the basis of the result of the comparison between the capacity of the storage area that has been allocated to the VM that has stopped running and the calculated capacity, the hypervisor 3b may also add and delete a move destination physical address that is sent as a notification to the memory controller. Specifically, if the capacity of the memory in the virtual machine system is insufficient, it may also be possible to compare, instead of all the storage areas in a DIMM in which a UE has occurred, the volume of the data stored in the DIMM in which the UE has occurred with the capacity of the storage area that was allocated to a VM that has stopped running.

As described above, the memory controller can more appropriately perform the move process on data by only improving a hypervisor and without improving the memory controller.

### (2) DIMM

The memory 4 described above includes multiple DIMMs #1 to #3; however, the embodiments are not limited thereto. For example, an arbitrary number of DIMMs may also be included. Furthermore, the storage capacity of each DIMM may also be the same or be different. Furthermore, in addition to DIMMs, for example, a solid state drive (SSD) or other semiconductor memories may also be used.

### Reference Signs List

- 1: virtual machine system
- 1a: virtual machine system
- 2: CPU
- 2a: CPU
- 3: hypervisor
- 3a: hypervisor
- 4: memory
- 5: physical address conversion table
- 10: memory controller
- 11: DIMM address conversion table
- 12: move destination DIMM address detection circuit
- 13: move source DIMM address detection circuit
- 14: data move control circuit
- 15: error checker

## Claims

1. A memory management method comprising:
extracting, performed by a memory management device storing a conversion table, a physical address that indicates a storage area in a memory module in which an error has been detected from the conversion table in which a physical address, which is used by an information processing apparatus to uniquely identify a storage area included in the memory module of a plurality of memory modules, is associated with a memory address, which is used by a memory management device to uniquely identify the storage area;
extracting, when a physical address that indicates a storage area that stores therein information that is to be deleted due to the occurrence of the detected error is acquired from the information processing apparatus, the memory address associated with the acquired physical address from the conversion table, performed by the memory management device;
updating the conversion table such that the extracted memory address is associated in the conversion table with the extracted physical address, performed by the memory management device; and
moving the information stored in the storage area indicated by the extracted physical address to the storage area indicated by the extracted memory address, performed by the memory management device.

2. The memory management method according to claim 1, further comprising:
comparing the capacity of the storage area in the memory module in which the error has occurred with the capacity of the storage area that stores therein the information that is to be deleted due to the occurrence of the error, performed by the information processing apparatus,
selecting a storage area, from among storage areas that store therein the information that is to be deleted due to the occurrence of the error, whose capacity is the same as that of the storage area included in the memory module in which the error has occurred when the capacity of the storage area in the memory module in which the error has occurred is less than the capacity of the storage area that stores therein the information that is to be deleted due to the occurrence of the error, performed by the information processing apparatus, and
notifying the memory management device of a physical address that indicates the selected storage area, performed by the information processing apparatus,.

3. The memory management method according to claim 1 or 2, further comprising:
comparing the capacity of the storage area in the memory module in which the error has occurred with the capacity of the storage area that stores therein the information that is to be deleted due to the occurrence of the error, performed by the information processing apparatus,
detecting, when the capacity of the storage area in the memory module in which the error has occurred is greater than the capacity of the storage area that stores therein the information that is to be deleted due to the occurrence of the error, a physical address of a storage area that is not being used, performed by the information processing apparatus, and
notifying the memory management device of the detected physical address together with the physical address that indicates the storage area that stores therein the information that is to be deleted due to the occurrence of the error, performed by the information processing apparatus.

4. The memory management method according to claim 3, wherein
the detecting includes detecting, when the capacity of the storage area in the memory module in which the error has occurred is greater than the capacity of the storage area that stores therein the information that is to be deleted due to the occurrence of the error, a physical address of a storage area that is not being used, performed by the information processing apparatus,
the notifying includes notifying, when the sum of the capacity of the storage area indicated by the detected physical address and the capacity of the storage area that stores therein the information that is to be deleted due to the occurrence of the error is less than the capacity of the storage area in the memory module in which the error has occurred, the memory management device that the storage area is insufficient, performed by the information processing apparatus, and wherein the memory management method further comprises
deleting, when a notification is received from the information processing apparatus indicating that the storage area is insufficient, a memory address that is associated with the extracted physical address from the conversion table without moving the information, performed by the memory management device.

5. A memory management device comprising:
a storing unit that stores therein a conversion table in which a physical address, which is used by an information processing apparatus to uniquely identify a storage area included in a memory module of a plurality of memory modules, is associated with a memory address, which is used by a memory management device to uniquely identify the storage area;
a first extracting unit that extracts, from the conversion table unit, a physical address that indicates a storage area in a memory module in which an error has been detected;
a second extracting unit that extracts, from the conversion table unit, when a physical address that indicates a storage area that stores therein information that is to be deleted due to the occurrence of the error is acquired from the information processing apparatus, the memory address associated with the acquired physical address;
an updating unit that updates the conversion table stored in the storing unit such that the memory address extracted by the second extracting unit is associated in the conversion table with the physical address extracted by the first extracting unit; and
a moving unit that moves the information stored in the storage area that is indicated by the physical address extracted by the first extracting unit to the storage area indicated by the memory address extracted by the second extracting unit.

6. A memory management circuit comprising:
a storing unit that stores therein a conversion table in which a physical address, which is used by an information processing apparatus to uniquely identify a storage area included in a memory module of a plurality of memory modules, is associated with a memory address, which is used by a memory management device to uniquely identify the storage area;
a first extracting unit that extracts, from the conversion table unit, a physical address that indicates a storage area in a memory module in which an error has been detected;
a second extracting unit that extracts, from the conversion table unit, when a physical address that indicates a storage area that stores therein information that is to be deleted due to the occurrence of the error is acquired from the information processing apparatus, the memory address associated with the acquired physical address;
an updating unit that updates the conversion table stored in the storing unit such that the memory address extracted by the second extracting unit is associated in the conversion table with the physical address extracted by the first extracting unit; and
a moving unit that moves the information stored in the storage area that is indicated by the physical address extracted by the first extracting unit to the storage area indicated by the memory address extracted by the second extracting unit.
